# EUROPÄISCHE PATENTSCHRIFT

(11) **EP 3 395 663 B1**
(45) Veröffentlichungstag und Bekanntmachung des Hinweises auf die Patenterteilung: **18.09.2019**
(21) Anmeldenummer: 18000351.9
(22) Anmeldetag: 13.04.2018
(51) Int. Cl.: B62M 6/45, B60K 6/543, B62M 6/55, B62M 6/65, B62M 11/14, B60L 50/20

(54) **ELEKTROMOTORISCHER FAHRRADZUSATZANTRIEB MIT STUFENLOS VARIABLER ÜBERSETZUNG**
ELECTRIC MOTOR BICYCLE ADDITIONAL DRIVE WITH STEPLESSLY VARIABLE RATIO
ENTRAÎNEMENT AUXILIAIRE DE BICYCLETTE PAR MOTEUR ÉLECTRIQUE À TRANSMISSION À VARIATION CONTINUE

(30) Priorität: 24.04.2017 DE 102017003945
(43) Veröffentlichungstag der Anmeldung: 31.10.2018
(73) Patentinhaber: Oechsler AG, 91522 Ansbach (DE)
(72) Erfinder: Wissmüller, Klaus, D - 91567 Herrieden (DE); Maurer, Gerhard, D - 91601 Dombühl (DE)
(74) Vertreter: Führing, Dieter

(56) Entgegenhaltungen:
- WO-A1-2016/104564
- US-A1- 2015 122 565

## Beschreibung

Die Erfindung betrifft einen elektromotorischen Zusatzantrieb für ein Fahrrad in der Auslegung eines Pedelec oder eines E-Bike, gemäß dem Oberbegriff des Patentanspruches 1.

Bei Auslegung als Pedelec darf der elektrische Unterstützungsmotor im Fahrbetrieb nur arbeiten, wenn und solange mittels der Pedal-Kurbelwelle ein Drehmoment eingebracht wird.

Beim gattungsgemäßen Zusatzantrieb gemäß WO 2016/143303 A1 ist zwischen Antrieb und Abtrieb ein Planetengetriebe angeordnet. In dem wälzen sich auf einem Träger gelagerte Planetenräder zwischen einer Sonne und einem Hohlrad ab. Daraus resultieren drei mögliche, zueinander konzentrische Drehachsen; nämlich hinsichtlich der Drehbewegungen des Planetenträgers, der Sonne und des Hohlrades. Eine antriebsseitige Überlagerung von Drehmomenten-Beiträgen aus der Pedal-Kurbelwelle und aus einem Unterstützungsmotor wird um eine dieser drei Drehachsen eingebracht; und ein weiteres motorisches Drehmoment um eine andere der drei Drehachsen eingebracht. Die Rotation um die verbleibende, dritte Achse definiert den Abtrieb des Planetengetriebes.

Von dieser grundsätzlichen Anordnung wird bei dem Zusatzantrieb nach DE 11 2015 005 797 T5 (nächstliegender Stand der Technik) unter der Konkretisierung Gebrauch gemacht, dass hier der Unterstützungsmotor auf das Hohlrad wirkt, das mit der Pedal-Kurbelwelle drehfest verbunden ist. Ein weiterer Elektromotor treibt die Sonne an. Die resultierende Rotation des Planetenträgers ist die Drehbewegung, die vom Zusatzantrieb ausgegeben wird; nämlich mittels einer auf der Pedal-Kurbelwelle drehgelagerten Hohlwelle. Über eine konstruktiv sehr aufwändige Klemmkupplung am Planetenträger wird eine rückwärts orientierte Pedalbewegung von einer Rücktrittwirkung aufgenommen.

Vorliegender Erfindung liegt die technische Problemstellung zugrunde, eine funktionsunkritisch stufenlos veränderbare Drehmomentenübertragung von der Kurbelwelle zum Abtriebsrad eines Fahrrad-Zusatzantriebes anzugeben; realisierbar mit minimalem getriebetechnischem Zusatzaufwand und das unter Eröffnung einer Realisierung in besonders kompakter Bauform.

Diese Aufgabe ist durch das Zusammenwirken der im Hauptanspruch angegebenen wesentlichen Merkmale gelöst.

Während beim üblichen Einsatz eines Planetengetriebes eine der drei Drehbewegungen um die koaxialen Achsen von Sonne, Planetenträger und Hohlrad zum Liefern eines Reaktionsmomentes stillgesetzt sein muss, wird in als solcher bekannter Weise nun deren Drehbewegung gewissermaßen mit variablem Schlupf betrieben. Dadurch variiert das über das Planetengetriebe übertragene Drehmoment entsprechend. Im Extremfall, wenn ein freies Mitdrehen um die dafür ausgewählte Achse zugelassen ist, wird über diesen Getriebezug gar kein Drehmoment von der Kurbelwelle oder vom Unterstützungsmotor des Zusatzantriebes an dessen Abtriebsrad übertragen. Andererseits resultiert aus einem temporären Stillsetzen der Drehbewegung um diese fragliche Achse eine währenddessen maximale Drehmomenten- und Drehzahlübertragung zum Abtriebsrad.

Die variable Drehzahl der Sonne des Planetengetriebes kann gemäß einem Aspekt im Rahmen der erfindungsgemäßen Lösung dadurch gezielt stufenlos variiert werden, dass diese Drehbewegung einem variablen Brems-Moment unterworfen wird. Das kann mechanisch, durch variable Reibung, hervorgerufen werden, etwa an einer wellenfesten Trommel oder Scheibe; aber auch etwa hydrodynamisch oder elektromechanisch. In letzterem Falle arbeitet diese, konstruktiv nicht drehfest angeordnete, Welle etwa auf einen dynamoelektrischen Generator. Dessen elektrische Bremsenergie kann zum Nachladen eines Akkumulators für den Betrieb des Unterstützungsmotors herangezogen werden. Weiterhin von Vorteil ist, dass der im Lastkreis messbare Generatorstrom ein Maß für das aktuelle Übersetzungsverhältnis ist. Zugleich ist der Generatorstrom ein Maß für das momentane, aus der Überlagerung von Pedalmoment und Unterstützungsmoment resultierende Drehmoment. Deshalb erübrigt sich nun der Aufwand für Montage und Auswerten eines gesonderten Drehmomentensensors zur elektrischen Steuerung des Unterstützungsmotors.

Die über ihre Drehzahl das Übersetzungsverhältnis des Planetengetriebes bestimmende Drehbewegung ist vorzugsweise diejenige des Planeten-Hohlrades. Da über dieses Planetengetriebe am drehbar gelagerten Planetenträger die Drehmomente der langsamen Pedalbewegung und des dagegen hochtourigen Unterstützungsmotors zusammengeführt werden, ist es zweckmäßig, getriebetechnisch, durch entsprechende Zahnradpaarungen, die beiden zu überlagernden Drehzahlen möglichst einander anzugleichen. Dazu erfährt der Beitrag der Pedalwelle eine Übersetzung und der Beitrag vom Unterstützungsmotor eine Untersetzung ihrer Drehzahlen.

Die auf der Kurbelwelle drehbar gelagerte hohle Sonnen-Welle ist abtriebsseitig mit einem darauf drehfesten Abtriebsrad ausgerüstet, vorzugsweise mit einem Zugblatt für Ketten- oder Riemenabtrieb. Die Sonne und damit das Abtriebsrad werden gedreht, insoweit die Planeten zwischen der Sonne und dem drehbar gelagerten Hohlrad mit vorgebbarer Drehbewegung abwälzen. Dazu kann die aktuelle übersetzungsbestimmende Drehzahl des Hohlrades mittels wenigstens einer der erwähnten passiven oder aktiven Einrichtungen (Bremse oder Motor) variabel vorgegeben werden.

Wenn jene Einrichtung nicht passiv (bremsend) auf das Planetengetriebe einwirken soll, kann sie also gemäß einer vorteilhaften Weiterbildung der Erfindung auch dafür ausgelegt sein, die fragliche drehzahlvariable Rotation des Planetengetriebes mittels insbesondere eines drehzahlgeregelten Gleichstrommotors, des hier so genannten Übersetzungsmotors, zu beeinflussen. Der Übersetzungsmotor greift dann zum Variieren des wirksamen Übersetzungsverhältnisses des Planetengetriebes in dieses mit variabel vorgebbarer Drehzahl ein.

In jedem Falle lässt sich die Drehmomenten-Übertragung über das nun erfindungsgemäß gleicherweise mit passivem oder mit aktivem Schlupf betriebene Planetengetriebe in stufenloser Übersetzung vorgeben und variieren.

Zusätzliche Weiterbildungen und Abwandlungen im Rahmen vorliegender Erfindung ergeben sich aus den weiteren Ansprüchen und, auch unter Berücksichtigung derer Vorteile, aus nachstehender Beschreibung von in der Zeichnung auf das Funktionswesentliche abstrahiert veranschaulichten bevorzugten Realisierungsbeispielen zur erfindungsgemäßen Lösung. In den Skizzen der Zeichnung zeigt
- Fig.1: ohne Berücksichtigung von Lagerstellen eine Pedal-Kurbelwelle, deren Drehmoment mit demjenigen des Unterstützungsmotors eines Fahrrad-Zusatzantriebes am Planetengetriebe zusammengeführt ist, mit stufenlos veränderbarer Drehmomentenübertragung zum Abtriebsrad, und
- Fig.2: eine mit derjenigen nach Fig. 1 funktional vergleichbare Antriebs-Getriebeanordnung in konstruktiv kompakterer Auslegung.

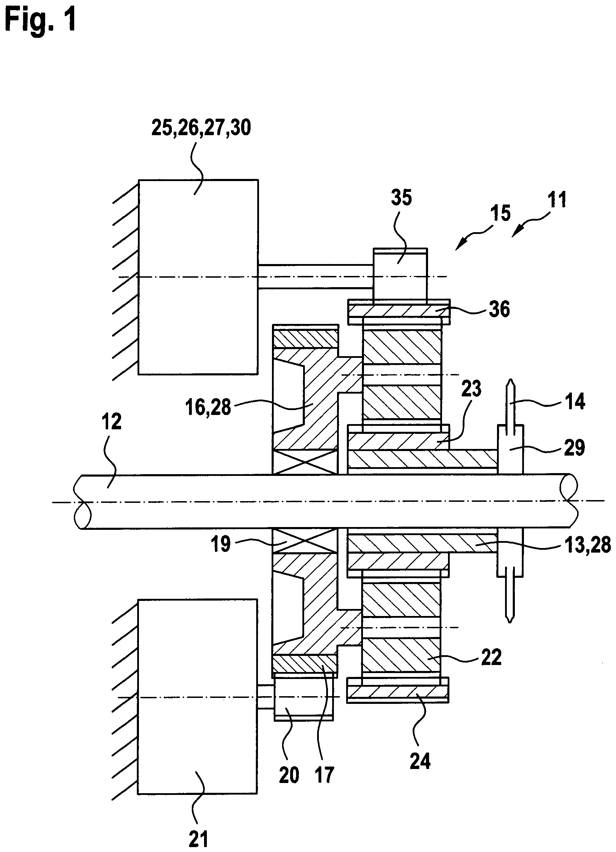

Bei der skizzierten Auslegung eines Fahrrad-Zusatzantriebes 11 gemäß Fig.1 trägt eine mit Pedalen versehene und so mit Muskelkraft drehbare Kurbelwelle 12 eine darauf frei drehbar gelagerte Hohlwelle 13. Die ist drehfest mit einem Abtriebsrad 14 in Auslegung eines Kettenblattes oder eines Riemenrades bestückt.

Im regulären Betrieb erfolgt der Antrieb der Hohlwelle 13 von der Kurbelwelle 12 her über ein Planetengetriebe 15. Dessen, auch als Steg bezeichneter, Planetenträger 16 ist drehbar auf der Kurbelwelle 12 gelagert und mit einer umlaufenden Verzahnung 17 versehen. Planetenträger 16 und Kurbelwelle 12 sind dabei derart über einen Freilauf 19 miteinander funktional verbunden, dass eine Drehmomentenübertragung nur stattfindet, wenn die Kurbelwelle 12 für Antrieb in Fahrtrichtung pedaliert wird. Die dann wirksame Übersetzung geht ins Schnellere. Außerdem steht mit der Planetenträger-Verzahnung 17 das Ritzel 20 eines Unterstützungsmotors 21 in einem Eingriff, der hier zur Untersetzung (Übersetzung ins Langsamere) ausgelegt ist.

Symbolisch ist in der Zeichnung berücksichtigt, dass die drehfeste Installation des Abtriebsrades 14 über eine Umrüsteinrichtung 29 wahlweise an die Abtriebs-Hohlwelle 13 oder aber an die Antriebs-Kurbelwelle 12 angeschlossen werden kann. Letzteres ist von Interesse als Notbetrieb bei einer Betriebsstörung im Bereich des Planetengetriebes 15; denn dann kann das Abtriebsrad 14 in konventioneller Weise, infolge der nun freigeschalteten Sonne 23 ohne Belastung durch das Planetengetriebe 15, direkt über das Pedalieren der Kurbelwelle 12 angetrieben werden.

Die Standübersetzung des Planetengetriebes 15 ist derart bemessen, dass für den im Betrieb benötigten Drehzahlbereich sein Hohlrad 24 zwar mit unterschiedlichen Drehzahlen aber stets in derselben Richtung rotiert. Deshalb ist es gleichgültig, ob der momentan größere Drehmomenten-Beitrag gerade von der Kurbelwelle 12 oder vom Unterstützungsmotor 21 herrührt - auch der Planeten-Träger 16 dreht sich stets in derselben Richtung.

Die auf dem Träger 16 drehbar gelagerten Planeten 22 wälzen sich zwischen der Außenverzahnung der mittels der Hohlwelle 13 verdrehbar auf der Kurbelwelle 12 gelagerten Sonne 23 und der Innenverzahnung des Hohlrades 24 ab; nämlich um die Sonne 23 zu verdrehen, insoweit das rotierende Hohlrad 24 gerade das dafür erforderliche Stütz- oder Reaktionsmoment liefert.

Daraus folgt, dass auf die mit der Sonne 23 drehfest verbundene Abtriebs-Hohlwelle 13 kein Drehmoment geliefert wird, wenn die Drehbeweglichkeit des Hohlrades 24 freigegeben ist; dass also das auf das Abtriebsrad 14 übertragene Drehmoment über die Drehbeweglichkeit des Hohlrades 24 beeinflussbar ist. Indem das Hohlrad 24 relativ zur Sonne 23 beziehungsweise zum Planetenträger 16 variabel rotiert, wird die wie gewünscht stufenlos variierbare Gesamtübersetzung über das Planetengetriebe 15 realisiert.

Um das zu übertragende Drehmoment derart zu steuern, kann an das Hohlrad 24 eine variable Brems-Einrichtung 25 angeschlossen sein, hier mittels eines Brems-Ritzels 35, das mit der Außenverzahnung 36 des Hohlrades 24 kämmt. Diese Einrichtung 25 arbeitet bevorzugt nicht mechanisch, sondern elektrodynamisch, etwa dynamoelektrisch unter Einsatz eines Gleichstrommotors im Dynamo- oder Generatorbetrieb. Solch ein Generator 26 arbeitet auf eine variable elektrische Last 27, über welche die Drehzahl des Hohlrades 24 und damit das momentan über das Planetengetriebe 15 übertragene, resultierende Drehmoment variierbar ist. Die vom Generator 26 in die Last 27 abgegebene elektrische Leistung ist dadurch ein Maß für das momentan wirksame Übersetzungsverhältnis, und auch für das gerade übertragene Drehmoment.

Um diese vom Brems-Generator 26 gelieferte elektrische Energie nicht in Verlustwärme umzusetzen, wird sie (in der Zeichnung nicht berücksichtigt) zweckmäßigerweise unmittelbar zum Antrieb des Unterstützungsmotors 21 herangezogen. Parallel dazu oder stattdessen kann aus dem Generator 26 ein Akkumulator für den Betrieb des elektromotorischen Zusatzantriebes 11, zumal einschließlich seiner Motorsteuerung, nachgeladen werden.

Die durch Bremsen variierbare, das resultierende Übersetzungsverhältnis bestimmende Drehzahl des Hohlrades 24 lässt sich auch dadurch vorgeben und stufenlos variieren, dass das Hohlrad 24 von einer Einrichtung 25 in Form eines drehzahlgeregelten Übersetzungsmotors 30 aktiv angetrieben wird. Dieser auferlegt dann dem Hohlrad 24 seine, die aktuelle Getriebeübersetzung ergebende, Drehgeschwindigkeit, auf die das Hohlrad 24 andernfalls von der Einrichtung 25 abgebremst werden müsste. Das rotationsabhängige Stützmoment des Hohlrades 24 kann also gleichermaßen passiv, durch ein variierendes Abbremsen und aktiv, durch einen drehzahlführenden Antrieb vorgegeben werden.

Der Unterstützungsmotor 21 und die Kurbelwelle 12 treiben nach Drehzahlangleichungen beide den Planetenträger 16 an, letztere über einen Rückdreh-Freilauf 19. Für das gesteuerte Abbremsen des Hohlrades 24, in dem der Planetenträger 16 rotiert, arbeitet die dritte, funktional dem Hohlrad 24 zugeordnete Planetengetriebe-Achse (28.24) hier über die Verzahnung 36 längs des Hohlrad-Umfanges auf das Ritzel 35 der Einrichtung 25; bei der es sich um den mit variabler Last 27 beschaltbaren Generator 26 zum Abbremsen handelt; oder um einen insbesondere drehzahlgeregelten Gleichstrom-Motor, den Übersetzungsmotor 30 zum Antreiben des Hohlrades 24 mit vorgebbarer Drehzahl.

Dieser elektromotorische Zusatzantrieb 11 für ein Elektrofahrrad vermeidet somit unangenehme Übersetzungssprünge aufgrund Umschaltens zwischen unterschiedlichen Zahnradpaarungen, indem eine variable Übersetzung raumsparend unmittelbar über das ohnehin vorhandene Planetengetriebe 15 realisiert wird. Die von der Kurbelwelle 12 und vom Unterstützungsmotor 21, beide über den Planetenträger 16 des Planetengetriebes 15, auf das Abtriebsrad 14 zu übertragenden Drehmomente und resultierenden Drehzahlen werden variiert, indem zu den Drehbewegungen um zwei der drei Achsen des Planetengetriebes 15 nun eine Drehbewegung um dessen dritte Achse 28 nicht mehr fixiert, sondern nun ebenfalls freigegeben ist - und zwar diese zusätzliche Drehbewegung des Hohlrades 24 infolge passiven Abbremsens oder infolge drehzahlgeregelten Antriebes mit variabel vorgebbarer Drehzahl.

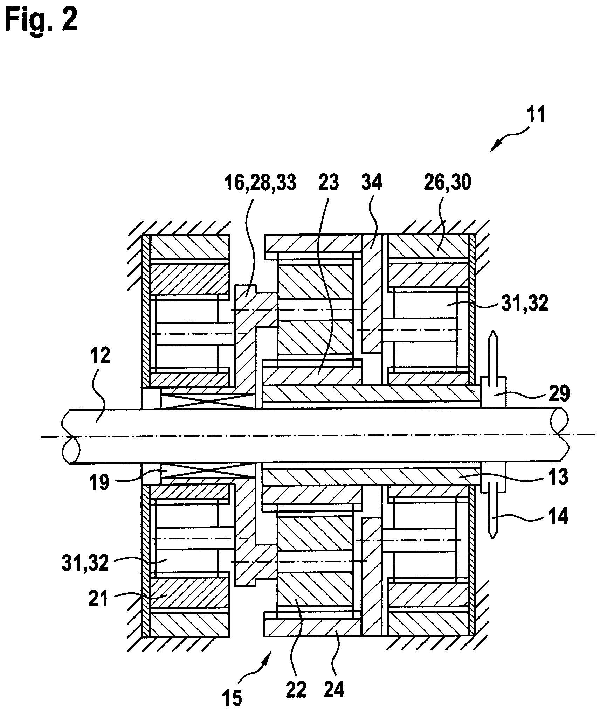

Die vorstehend beschriebene, getriebetechnische Lösung gemäß der Erfindung ist auch bei dem kompakteren Aufbau des Zusatzantriebes 11 gemäß Fig.2 beibehalten. Nun greifen allerdings der Unterstützungsmotor 21 und der Brems-Generator 26 beziehungsweise der Übersetzungsmotor 30 nicht mehr mittels Ritzeln 20, 35 (Fig.1) an das Planetengetriebe 15 an; sondern die Motore 21, 30 sind als Hohlwellenantriebe ausgelegt, mit deren Innenverzahnungen Planeten 31 von Umlaufgetrieben 32 in Eingriff stehen. Das Umlaufgetriebe 32 des Unterstützungsmotors 21 hat seinen Planetenträger 33 gemeinsam mit dem Planetenträger 16 des Planetengetriebes 15, was die Verzahnung 17 aus Fig.1 ersetzt. Das Hohlrad 24 ist drehstarr mit dem Planetenträger 34 des Umlaufgetriebes 32 im Übersetzungsmotor 30 verbunden, was funktional dem Eingriff des Brems-Ritzels 35 in die Hohlrad-Außenverzahnung 36 gemäß Fig.1 entspricht. Der Übersetzungsmotor 30 kann deshalb auch als Brems-Generator 26 betrieben werden. Die (nicht dargestellte) elektrische Drehzahlregelung des Übersetzungsmotors 30 bestimmt wieder die Drehzahl des Hohlrades 24 und damit das Übersetzungsverhältnis zwischen einerseits der Pedal-Kurbelwelle 12 samt Unterstützungsmotor 21 und andererseits der Sonne 23, also dem Abtriebsrad 14.

Wie sich schon aus einem bloßen Vergleich der korrespondierenden Darstellungen Fig.1 vs. Fig.2 ergibt, zeichnet sich die konzentrische Anordnung von Unterstützungsmotor 21, Planetengetriebe 15 und Brems- oder Antriebs-Einrichtung (25, gegebenenfalls 30) durch einen besonders geringen Raumbedarf aus; wofür hier das rotierende System im Unterstützungsmotor 21 mit dem Planetengetriebe 15 einen gemeinsamen Planetenträger 16-33 aufweist; während das variabel rotierende Hohlrad 24 des Planentengetriebes 15 starr mit dem Planetenträger 34 eines rotierenden Systems innerhalb eines Hohlrades der Einrichtung 25/26/30 verbunden ist. Die hier rotierenden Planetenträger 33, 34 haben dadurch zusätzlich die Funktionen der Motorwellen übernommen.

Auch bei dieser konstruktiven Auslegung des Zusatzantriebes 11 nach Fig.2 erlaubt es der variable Eingriff in die Rotation des Hohlrades 24, das über das Planetengetriebe 15 resultierende Übersetzungsverhältnis mittels der vorgebbaren Hohlrad-Drehzahl zu variieren. Dazu kann die Rotation des Hohlrades 24, in Fig.2 wie im Falle der Fig.1, gezielt entweder abgebremst oder angetrieben werden.

### Bezugszeichenliste

- 11: Zusatzantrieb
- 12: Kurbelwelle (in 11)
- 13: Hohlwelle (auf 12)
- 14: Abtriebsrad (an 13)
- 15: Planetengetriebe (zwischen 12/21 und 13)
- 16: Planetenträger (von 15)
- 17: Verzahnung (an 16)
- 18: -
- 19: (Rücktritt-)Freilauf (zwischen 12 und 16)
- 20: Ritzel (von 21, kämmt mit 17)
- 21: Unterstützungsmotor (parallel zu 12 auf 16)
- 22: Planeten (an 16)
- 23: Sonne (von 15)
- 24: Hohlrad (von 15)
- 25: (Brems- oder Antriebs-)Einrichtung (für 24)
- 26: Generator (als 25 für 24)
- 27: Last (an 26)
- 28: Wellen bzw. deren Achsen (von 15; 16, 23; Achse von 24)
- 29: Umrüsteinrichtung (von 14 wahlweise zu 12 oder zu 13/23)
- 30: Übersetzungsmotor (für 24; als 25 an 15)
- 31: Planeten (von 32)
- 32: Umlaufgetriebe (in 21 und in 30)
- 33: Planetenträger (von 32 in 21)
- 34: Planetenträger (von 32 in 30)
- 35: Bremsritzel (von 25)
- 36: Außenverzahnung (von 24)

## Patentansprüche

1. Elektromotorischer Zusatzantrieb (11) für ein Fahrrad in Auslegung als Pedelec oder als E-Bike mit einem Planetengetriebe (15), bei dem antriebsseitig ein Planetenträger (16) sowohl von einer Pedal-Kurbelwelle (12) als auch von einem Unterstützungsmotor (21) drehbeaufschlagt ist, bei dem die Drehzahl eines drehbar gelagerten Hohlrades (24) von einer damit in Eingriff stehenden Einrichtung (25) vorgebbar und variierbar ist, und bei dem der Abtrieb über eine Sonne (23) zu einem Abtriebsrad (14) erfolgt, **gekennzeichnet durch** eine von der Pedal-Kurbelwelle (12) koaxial durchquerte Abtriebs-Hohlwelle (13), die drehstarr einerseits mit der Sonne (23) des Planetengetriebes (15) und andererseits mit dem Abtriebsrad (14) ausgestattet ist, durch einen Rücktritt-Freilauf (19), über den der Planetenträger (16) mit der Pedal-Kurbelwelle (12) wirkverbunden ist, und durch eine mechanische oder dynamoelektrische Brems- oder Antriebs-Einrichtung (25).

2. Zusatzantrieb nach Anspruch 1, **dadurch gekennzeichnet, dass** das Planetengetriebe (15) mit einer Standübersetzung ausgelegt ist, die unter Betriebsbedingungen zu stets gleicher Drehrichtung des Hohlrades (24) und des Planetenträgers (16) führt, unabhängig von den momentan von der Kurbelwelle (12) oder von dem Unterstützungsmotor (21) gelieferten Drehmomenten.

3. Zusatzantrieb nach Anspruch 1, **dadurch gekennzeichnet, dass** die dynamoelektrische Bremseinrichtung (25) ein Generator (26) ist.

4. Zusatzantrieb nach Anspruch 3, **dadurch gekennzeichnet, dass** vom Generator (26) gelieferte elektrische Bremsenergie einen Akkumulator für den Betrieb des Unterstützungsmotors (21) nachlädt.

5. Zusatzantrieb nach Anspruch 3, **dadurch gekennzeichnet, dass** vom Generator (26) gelieferter Laststrom ein Maß für das momentan aus Pedalmoment und Unterstützungsmoment resultierende Drehmoment ist.

6. Zusatzantrieb nach Anspruch 1, **dadurch gekennzeichnet, dass** als Einrichtung (25) ein drehzahlregelbarer Übersetzungsmotor (30) vorgesehen ist.

7. Zusatzantrieb nach Anspruch 1, **dadurch gekennzeichnet, dass** ein mit der Sonne (23) drehverbundenes Abtriebsrad (14) bedarfsweise von der Sonne (23) abkoppelbar und stattdessen mit der Kurbelwelle (12) drehverbindbar ist.

8. Zusatzantrieb nach Anspruch 6, **dadurch gekennzeichnet, dass** die Planeten (31) mit Innenverzahnungen von Hohlwellenantrieben als dem Unterstützungsmotor (21) und als dem Übersetzungsmotor (30) in Eingriff stehen und dass das Hohlrad (24) drehstarr mit dem Planetenträger (34) im Übersetzungsmotor (30) verbunden ist.

9. Zusatzantrieb nach Anspruch 8, **dadurch gekennzeichnet, dass** ein gemeinsamer Planetenträger (33-16) für die im Zusatzantrieb gegeneinander axial versetzten Planeten (31) beim Unterstützungsmotor (21) und beim Planetengetriebe (15) vorhanden ist.

## Claims

1. Electric motor-operated auxiliary drive (11) for a bicycle of pedelec or E-Bike design having a planetary gear mechanism (15), in which, on the drive side, a planet carrier (16) is subjected to rotation both by a pedal crankshaft (12) and by an assist motor (21), in which the speed of a rotatably mounted ring gear (24) can be predetermined and varied by a device (25) in engagement therewith, and in which the output occurs via a sun gear (23) to an output gear (14), **characterized by** a hollow output shaft (13) which is traversed coaxially by the pedal crankshaft (12) and which is equipped in a rotationally rigid manner with the sun gear (23) of the planetary gear mechanism (15) on the one hand and with the output gear (14) on the other hand, by a backpedalling freewheel (19) in which the planet carrier (16) is operatively connected to the pedal crankshaft (12), and by a mechanical or dynamoelectrical braking or driving device (25).

2. Auxiliary drive according to Claim 1, **characterized in that** the planetary gear mechanism (15) is designed with a stationary transmission ratio which, under operating conditions, leads to always the same direction of rotation of the ring gear (24) and of the planet carrier (16), independently of the torques delivered instantaneously by the crankshaft (12) or by the assist motor (21).

3. Auxiliary drive according to Claim 1, **characterized in that** the dynamoelectrical braking device (25) is a generator (26).

4. Auxiliary drive according to Claim 3, **characterized in that** electrical braking energy delivered by the generator (26) recharges an accumulator for the operation of the assist motor (21) .

5. Auxiliary drive according to Claim 3, **characterized in that** load current delivered by the generator (26) is a measure of the torque resulting instantaneously from pedal torque and assist torque.

6. Auxiliary drive according to Claim 1, **characterized in that** a speed-controllable transmission motor (30) is provided as the device (25) .

7. Auxiliary drive according to Claim 1, **characterized in that** an output gear (14) rotationally connected to the sun gear (23) can be decoupled as required from the sun gear (23) and instead can be rotationally connected to the crankshaft (12).

8. Auxiliary drive according to Claim 6, **characterized in that** the planets (31) are in engagement with internal toothings of hollow shaft drives as the assist motor (21) and as the transmission motor (30), and **in that** the ring gear (24) is connected in a rotationally rigid manner to the planet carrier (34) in the transmission motor (30).

9. Auxiliary drive according to Claim 8, **characterized in that** a common planet carrier (33-16) for the planets (31), which are axially offset with respect to one another in the auxiliary drive, is present in the assist motor (21) and in the planetary gear mechanism (15).

## Revendications

1. Entraînement auxiliaire par moteur électrique (11) pour une bicyclette du type Pedelec ou E-Bike avec un engrenage planétaire (15), dans lequel un porte-satellites (16) est sollicité en rotation côté entraînement aussi bien par un axe de pédalier (12) que par un moteur auxiliaire (21), dans lequel le nombre de tours d'une couronne dentée (24) montée de façon rotative peut être défini et modifié par un dispositif (25) en prise avec elle, et dans lequel la sortie est effectuée par une roue solaire (23) vers une roue de sortie (14), **caractérisé par** un arbre creux de sortie (13) traversé coaxialement par l'axe de pédalier (12), et qui est équipé d'une part de la roue solaire (23) de l'engrenage planétaire (15) et d'autre part de la roue de sortie (14), par une roue libre arrière (19), par laquelle le porte-satellite (16) est en liaison active avec l'axe de pédalier (12), et par un système de frein ou d'entraînement mécanique ou dynamoélectrique (25).

2. Entraînement auxiliaire selon la revendication 1, **caractérisé en ce que** l'engrenage planétaire (15) est conçu avec un rapport de transmission constant, qui dans des conditions de fonctionnement conduit toujours au même sens de rotation de la couronne dentée (24) et du porte-satellites (16), indépendamment des couples de rotation instantanés fournis par l'axe (12) ou par le moteur auxiliaire (21).

3. Entraînement auxiliaire selon la revendication 1, **caractérisé en ce que** le système de frein dynamoélectrique (25) est un générateur (26).

4. Entraînement auxiliaire selon la revendication 3, **caractérisé en ce que** l'énergie électrique de freinage produite par le générateur (26) recharge un accumulateur pour le fonctionnement du moteur auxiliaire (21).

5. Entraînement auxiliaire selon la revendication 3, **caractérisé en ce que** le courant de charge produit par le générateur (26) est une mesure du couple de rotation instantané résultant du couple du pédalier et du couple auxiliaire.

6. Entraînement auxiliaire selon la revendication 1, **caractérisé en ce qu'**il est prévu comme système (25) un motoréducteur avec régulation de la vitesse de rotation (30).

7. Entraînement auxiliaire selon la revendication 1, **caractérisé en ce qu'**une roue de sortie (14) couplée en rotation à la roue solaire (23) peut être au besoin découplée de la roue solaire (23) et peut en remplacement être couplée en rotation à l'axe de pédalier (12).

8. Entraînement auxiliaire selon la revendication 6, **caractérisé en ce que** les satellites (31) sont en prise avec des dentures intérieures d'entraînements d'arbre creux comme le moteur auxiliaire (21) et le motoréducteur (30) et **en ce que** la couronne dentée (24) est assemblée de façon calée en rotation au porte-satellites (34) dans le motoréducteur (30).

9. Entraînement auxiliaire selon la revendication 8, **caractérisé en ce qu'**il se trouve un porte-satellites commun (33-16) pour les satellites (31) décalés axialement l'un par rapport à l'autre dans l'entraînement auxiliaire dans le moteur auxiliaire (21) et dans l'engrenage planétaire (15).
